# EUROPEAN PATENT APPLICATION

(11) **EP 3 907 180 A1**
(43) Date of publication of application: **10.11.2021**
(21) Application number: 20305427.5
(22) Date of filing: 04.05.2020
(51) Int. Cl.: B82Y 30/00, C08F 122/22, C08F 222/22

(54) **PROCESS FOR FUNCTIONALIZING A SURFACE OF A SOLID SUPPORT WITH NANO- OR MICROPARTICLES**

(71) Applicant: Université de Technologie de Troyes, 10000 Troyes (FR)
(72) Inventor: Jradi, Safi, 10120 Saint André-les-Vergers (FR); Issa, Ali, 10000 Troyes (FR); Izquierdo Lorenzo, Irene, 28850 Torrejon de Ardoz (ES)
(74) Representative: Gevers & Orès

(57) **Abstract**

The present invention is in the field of surface functionalization of a surface with nano- or microparticles. In particular, the invention concerns a process for functionalizing a surface of a solid support with nano- or microparticles, polymers comprising polymerized amine-functionalized monomer units, their use to functionalize a solid support with nano- or microparticles, and the resulting nano- or microparticles functionalized polymers comprising polymerized amine-functionalized monomer units.

## Description

The present invention is in the field of surface functionalization of a surface with nano- or microparticles. In particular, the invention concerns a process for functionalizing a surface of a solid support with nano- or microparticles, polymers comprising polymerized amine-functionalized monomer units, their use to functionalize a solid support with nano- or microparticles, and the resulting nano- or microparticles functionalized polymers comprising polymerized amine-functionalized monomer units.

The properties of nanoparticles and microparticles, such as metal nanoparticles, metal oxide nanoparticles, quantum dots and nanodiamonds, often differ from the corresponding bulk material. For example, metal (e.g., Ag, Au and Cu) nanoparticles can exhibit a strong optical absorption and reflectance in the UV-visible range of the electromagnetic spectrum that is not present in the spectrum of the bulk metal. Metal nanoparticles also exhibit interesting electronic, magnetic and catalytic properties that are not present in the bulk metal. In particular, metallic nanoparticles attract much attention due to their optical properties, mainly their localized surface plasmon resonance LSPR that has a well-established application in sensing by Surface Enhanced Raman Spectroscopy (SERS).

Hence, nanostructured metal surfaces, and more generally nanostructured surfaces, with their unique properties and enhanced surface area, offer exciting opportunities for the development of novel sensors and detectors, catalysts, and absorbing and adsorbing media.

This is even truer with discrete NPs or microparticles precisely organized in multiple dimensions and on continuous length scales. Indeed, this organization leads to the formation of collective properties that differ from those of individual particles, providing great potential to many applications especially in plasmonics, photonics, catalysis, electronics and biotechnology.

Patterning of these NPs is thus highly desirable but challenging. Considerable efforts have been put forth to obtain precise and controllable 1D, 2D and 3D positioning of NPs on a substrate surface.

This positioning depends on a variety of alternative methods of top-down and bottom-up techniques including confined space-mediated fluid drying and capillary assembly of nanoparticles onto topographical traps strategies to form NP linear assemblies. This technique requires a complex sandwich-shaped patterning system, which needs many physical parameters to be adjusted in order to manipulate the microfluid morphology just along the arc of the microfluid path.

Also, convective assisted capillary force assembly method (CA-CFA) was proposed to obtain 3D superstructures. Focused electron beam irradiation has also been used for the immobilization of two-dimensional arrangement of gold nanoparticles (GNPs) that are attached on substrates by chemical methods. However, these chemical methods make it difficult to eliminate the unfixed NPs and thus random positioning on the substrate surface will occur.

To improve the assembly of NPs into 3D architectures, microfluid engineering has been developed.

However, the above-mentioned methods lack of versatility. They are indeed not universal, and are generally not suitable to obtain NPs or microparticles assembly within complex 1D, 2D, and 3D micro- or nanostructures.

Therefore, the development of a new general method involving possibly complex 1D, 2D, and 3D arrangement that overcomes the above-mentioned drawbacks is strongly needed.

Accordingly, it is an object of the present invention to provide a process that enables highly selective arrangement of NPs and microparticles of different sizes and nature within 1D, 2D, and complex 3D microstructures, in particular in the form of monolayers, while avoiding the aggregations and unclean substrate surfaces.

Inventors have for the first time demonstrated that polymers comprising polymerized amine-functionalized monomer units, in particular by radiation induced (or activated) polymerization, more particularly by photochemical or electron beam-induced (or activated) polymerization, or thermally induced (or activated) polymerization, enable the easy and precise positioning of NPs and microparticles on 1D, 2D, and 3D microstructures, in particular complex microstructures.

Thus, in one aspect, the present invention relates to a process for functionalizing a surface of a solid support with nano- or microparticles, said process comprising the stages of:
**i**) Reacting at least one monomer with at least one amine, to obtain an amine-functionalized monomer,
   said at least one monomer being a mono, bi-, tri- or tetrafunctional monomer wherein said functions are chosen from acrylate, methacrylate, epoxy and vinyl groups, said vinyl groups not being acrylate or methacrylate groups, at least one of said functions being an acrylate, methacrylate or epoxy group,
   said at least one amine being chosen from:
   amines of following formula (I) NR₁R₂R₃, wherein R₁, R₂ and R₃ are each independently chosen from H and C₁-C₈ linear or branched alkyl groups optionally substituted by a group R₄ chosen from -OH, -SH and aromatic groups, in particular phenyl, with the proviso that when R₁, R₂ and R₃ are not H, then at least one of R₁, R₂ and R₃ is a C₁-C₈ linear or branched alkyl group substituted by at least one -OH or -SH group, in particular by at least one -OH group ; and
   - aminoacids, in particular α-amino acids, more particularly natural aminoacids;
**ii**) bringing at least said surface into contact with a composition consisting of or comprising:
   - the functionalized monomer obtained in step i) ;
   - a polymerization initiator ;
   - a solvent; and optionally
   - a polymerization inhibitor ;
**iii**) polymerization of the composition of step ii) in contact with the surface to functionalize, to obtain a surface coated with an amine-functionalized polymer ; and
**iv**) contacting at least the surface coated with an amine-functionalized polymer obtained in step iii) with nano- or microparticles functionalized with negatively charged ligands, at a pH equal or less than (pKa of the amine, in particular of formula (I), + 1), to obtain a solid support with a surface functionalized with nano- or microparticles.

When the pKa of the amine is for example of 10.0, by "pKa of the amine + 1" is meant the value of 11.0.

By "negatively charged ligands" is preferably meant ligands bearing at least one negative charge.

Hence, said pH is such as said ligands are negatively charged, and preferably such as said nano- or microparticles functionalized with said ligands are stable.

In a particular embodiment, the contacting of step iv) is a contacting between at least the surface coated with an amine-functionalized polymer obtained in step iii) with a suspension of nano- or microparticles functionalized with negatively charged ligands, at a pH equal or less than (pKa of the amine, in particular of formula (I), + 1).

Hence, said pH is such as said ligands are negatively charged, and preferably such as said nano- or microparticles functionalized with said ligands do not aggregate.

The determination of a pH for which nano- or microparticles do not aggregate can be down by methods well known from those skilled in the art, for example by dynamic light scattering.

In a particular embodiment, the nano- or microparticles are functionalized with ligands bearing at least one carboxylic acid group, at a pH ranging from (pKa of said ligand -1), or if more than one, the lowest pKa of said ligand -1, to (pKa of the amine, in particular of formula (I), + 1).

In another particular embodiment, the nano- or microparticles are functionalized with ligands bearing at least one sulfate group.

In a particular embodiment, the nano- or microparticles have a size ranging from 1 nm to 100 µm, in particular from 1 nm to 10 µm, more particularly from 1 nm to 1 µm.

In a particular embodiment, the nano- or microparticles are constituted of or comprise a material chosen from metals, in particular gold, silver, platinum or aluminum metal oxides, in particular iron oxides and graphene oxide, diamonds, polymers, in particular polystyrenes, and semiconductors, in particular quantum dots.

In a particular embodiment, the solid support, in particular a flexible solid support, is chosen from the group consisting of conducting, semiconducting or insulating materials, in particular among metals, metal oxides, polymers, glasses, silicon, papers and carbon materials.

In a particular embodiment, the solid support is chosen materials that do not substantially bear at their surface chemical groups that are protonable at the pH defined above, in particular amines.

In a particular embodiment, the at least one monomer is :
- a mono, bi-, tri- or tetrafunctional, in particular trifunctional, monomer wherein said functions are acrylate or methacrylate groups, more particularly acrylate groups, or
- a mono, bi-, tri- or tetrafunctional, in particular bi-functional, monomer wherein said functions are epoxy groups.

In a particular embodiment, the at least one monomer is :
- a bi-, tri- or tetrafunctional, in particular trifunctional, monomer wherein said functions are acrylate or methacrylate groups, more particularly acrylate groups, or
- a bi-, tri- or tetrafunctional, in particular bi-functional, monomer wherein said functions are epoxy groups.

In a more particular embodiment, the at least one monomer is chosen from pentaerythriol triacrylate, trimethylolpropane triacrylate, pentaerythritol tetraacrylate, di(trimethylolpropane) tetraacrylate, triethylene glycol dimethacrylate, 1,6-hexanediol diacrylate (HDODA), aromatic urethane triacrylate, for example EBECRYL® 204, bisphenol A epoxy diacrylate, for example Ebecryl® 3708 or EBECRYL® 605, bisphenol A diglycidyl ether.

In a particular embodiment, step i) alternatively consists in the use of a commercially available amine modified monomer being a mono, bi-, tri- or tetrafunctional monomer wherein said functions are chosen from acrylate, methacrylate, epoxy and vinyl groups, said vinyl groups not being acrylate or methacrylate groups, at least one of said functions being an acrylate, methacrylate or epoxy group.

In a more particular embodiment, step i) consists in the use of an amine modified multifunctional acrylated polyethers, preferably commercially available, for example EBECRYL@ 80.

In a particular embodiment, the at least one amine is of formula (I) as defined above.

In a more particular embodiment, the at least one amine of formula (I) is such as at least one of R₁, R₂ and R₃ is different from H.

In another more particular embodiment, the at least one amine of formula (I) is such as R₁, R₂ and R₃ are each independently chosen from C₁-C₈ linear or branched alkyl groups, at least one of these groups, in particular two of these groups, being substituted by one -OH group.

In another more particular embodiment, the at least one amine of formula (I) is such as R₁ is H, R₂ and R₃ are each independently chosen from C₁-C₈ linear or branched alkyl groups, at least one of these groups, in particular both of these groups, being optionally substituted by one -OH group.

In another more particular embodiment, the at least one amine of formula (I) is such as R₁ and R₂ are H, and R₃ is chosen from C₁-C₈ linear or branched alkyl groups optionally substituted by one -OH group.

In a particular embodiment, the at least one amine of formula (I) is chosen from methyl diethanolamine, diethanolamine, diethyl amine, n-propylamine, n-butylamine, n-pentylamine, methanol amine, ethanolamine, n-propanol amine, n-butanol amine, n-pentanol amine, diethyl amine, dipropyl amine, dibutyl amine, dipentyl amine, dimethnaol amine, diethanol amine, dipropanol amine, dibutanol amine, dipentanol amine, and their derivatives.

The temperature of the reaction of step i) may be chosen from those skilled in the art, depending on the miscibility of the amine in the monomer, the reactivity of the amine and the viscosity of the monomer. For example, for some amines, it may not be necessary to heat, in particular because the reaction may be too fast and the mixture may become solid.

In addition, the one skilled in the art may select the reaction temperature (and, accordingly, the reaction duration) in order to not degrade the amine and/or the monomer.

In a particular embodiment, the reaction of step i) is performed at a temperature ranging from 20 to 70°C and/or for 1 second to 2 weeks, in particular from 1 second to 1 hour.

In a particular embodiment, the ratio of the at least one amine over the at least one monomer is from 0.5 to 50 wt%, in particular from 0.5 to 40 wt%, more particularly from 0.5 to 30 wt%, for example of about 10 wt%.

In another particular embodiment, the molar ratio of the at least one amine over the total number of functions of the monomer is below 1, in particular above 0.005 and below 1.

In a particular embodiment, the composition is brought into contact with the surface during step ii) by dipping, spincoating, sprinkling, projection, transfer, in particular with a syringe, drawdown application coating or spraying.

In a particular embodiment, the polymerization mentioned in step ii) and iii) is a radiation induced polymerization, more particularly a photochemical polymerization (photopolymerization) or an electron beam-induced polymerization, or a thermally induced polymerization.

In a particular embodiment, the polymerization of step ii) is a radical and/or cationic polymerization, in particular a radical and/or cationic photopolymerization.

Polymerization initiators are well known from those skilled in the art, in particular chosen from radiation induced polymerization initiators, more particularly photopolymerization initiators, or thermal polymerization initiators.

In a particular embodiment, the photopolymerization initiator is selected from radical polymerization initiators chosen from benzoin ketals, hydroxyketones, amino ketones, thioxanthones, acylphosphine oxides, and any combinations thereof, and/or from cationic polymerization initiators chosen from aromatic diazonium salts, aromatic sulfonium salts, aromatic iodonium salts, alkyl sulfonium salts, (6-cumene)(5-cyclopentadienyl)iron hexafluorophosphate, titanocenes, sulfonyloxy ketones and triaryl-siloxyethers, and any combinations thereof, wherein the alkyl group has 1 to 30 carbon atoms, and the aryl group has 7 to 30 carbon atoms.

In another particular embodiment, the thermal polymerization initiator is selected from azo compounds such as 2,2'-azobis(isobutyronitrile) (AIBN) and organic peroxides such as benzoyl peroxide (BPO).

In a particular embodiment, the polymerization initiator is included in an amount of about 0.01 wt % to about 7.5 wt %, more particularly of about 0.01 wt % to about 2 wt %, based on a total solid amount of the composition.

Polymerization inhibitors are well known from those skilled in the art.

In a particular embodiment, the polymerization inhibitor is selected from phenol-based compounds, or a combination thereof.

In a particular embodiment, the photopolymerization is a two photon polymerization or a one photon polymerization.

In a particular embodiment, the radiation induced polymerization is performed using a source chosen from pulsed or continuous laser, visible and UV laser, UV-Visible lamp or LED, electron and ion beam.

It has been found that the functionalization by the NPs or the microparticles does generally not depend on the thickness of the coating of the amine-functionalized polymer, providing said coating exists.

In a particular embodiment, the thickness of the coating of the amine-functionalized polymer is of 1 nm or more.

The upper thickness limit may for example be defined by the viscosity of the formulation and the possibility of light curing in the depth of the coating. The upper thickness limit may be of about 1µm, 10 µm, 100 µm, or 1 mm.

In a particular embodiment, the contacting of step iv) is performed at a pH such as:
- pH ≤ pKa of the amine of formula (I); or
- pH < 7, 6, 5 or 4.

In a particular embodiment, the contacting of step iv) is performed at a pH such as:
- ((lowest)pKa of said ligand -1) ≤ pH ≤ pKa of the amine of formula (I);
- (lowest)pKa of said ligand ≤ pH ≤ pKa of the amine of formula (I);
- ((lowest)pKa of said ligand -1) ≤ pH < 7; or
- (lowest)pKa of said ligand ≤ pH < 7, 6, 5 or 4.

In a particular embodiment, the nano- or microparticles are constituted of or comprise a material chosen from metals, in particular gold, silver, platinum or aluminum, metal oxides, in particular iron oxides and graphene oxide, diamonds, polymers, in particular polystyrenes, and the contacting of step iv) is performed at a pH such as:
- ((lowest)pKa of said ligand -1) ≤ pH < 7, 6, 5, or 4 ; or
- (lowest)pKa of said ligand ≤ pH < 7, 6, 5 or 4.

In a particular embodiment, the nano- or microparticles are constituted of or comprise a material chosen from semiconductors, being in particular quantum dots, and the contacting of step iv) is performed at a pH such as:
- (lowest)pKa of said ligand ≤ pH ≤ pKa of the amine of formula (I) + 1;
- 5, 6 or 7 ≤ pH ≤ pKa of the amine of formula (I) + 1.

The functionalized nano- or microparticles of step iv) are commercially available or obtainable with procedures well known from the skilled person in the art.

For example:
- Functionalized gold nanoparticles with citrate ligands may be prepared by the Turkevish's procedure as described by Frens et al. (Nature, vol. 241, no. 105, p. 20, 1973);
- Functionalized silver nanoparticles with citrate ligands are for example prepared following the Lee-Meisel method (Wan et al., J. Colloid Interface Sci., vol. 394, pp. 263-268, 2013);
- Functionalized quantum dots may be obtained following the procedures of Kwak et al. (Nano Lett., vol. 12, no. 5, pp. 2362-2366, 2012), and then the ligand exchange procedure (for example from oleic acid and trioctylphosphine oxide to 3-mercaptopropionic acid ligands) according to Dubois et al. (J. Am. Chem. Soc. 2007, 129, 3, 482-483) ;
- Functionalized Fe₃O₄ nanoparticles with citrate ligands are for example synthesized according to Nigam et al. (J. Magn. Magn. Mater., vol. 323, no. 2, pp. 237-243, 2011).

In addition, nanodiamonds functionalized with carboxylate ligands can be purchased from Sigma Aldrich (70nm, fluorescent nanodiamond), and polystyrene nanoparticles functionalized with carboxylate ligands from ThermoFisher Scientific.

In a particular embodiment, the functionalized nano- or microparticles of step iv) are in the form of a colloidal suspension, in particular in the form of a colloidal suspension in water or in the form of a colloidal suspension in an aqueous solution.

In a particular embodiment, the ligands bearing at least one carboxylic acid group have a pKa comprised from 3.0 and 5.0, and are more particularly:
- Citrates, the lowest pKa of which is in particular of about 3.13 ;
- 3-Mercaptopropionic acid, the pKa of which being in particular of about 4.34.

In a particular embodiment, the process additionally comprises stages iii1) and iii2), subsequent to stage iii) of:
iii₁) rinsing the surface of the solid support with a solvent, in particular chosen from acetone, methanol, ethanol, isopropanol, propylene glycol methyl ether acetate (PGMEA), cyclopentanone, and gamma-butyrolactone (GBL) ; and optionally
iii₂) drying said surface.

In a particular embodiment, the process additionally comprises stages iv₁) and iv₂), subsequent to stage iv) of:
iv₁) rinsing the surface of the solid support with water; and optionnaly
iv₂) drying said surface.

In another aspect, the present invention relates to a nano- or microparticles functionalized polymer comprising polymerized amine-functionalized monomer units,
said monomer units being mono, bi-, tri- or tetrafunctional monomer units wherein said functions are chosen from acrylate, methacrylate, epoxy and vinyl groups, said vinyl groups not being acrylate or methacrylate groups, at least one of said functions being an acrylate, methacrylate or epoxy group,
said monomer units being functionalized by at least one amine,
said at least one amine being of following formula (I) NR₁R₂R₃, wherein R₁, R₂ and R₃ are each independently chosen from H and C₁-C₈ linear or branched alkyl groups optionally substituted by a group R₄ chosen from -OH, -SH and aromatic groups, in particular phenyl, with the proviso that when R₁, R₂ and R₃ are not H, then at least one of R₁, R₂ and R₃ is a C₁-C₈ linear or branched alkyl group substituted by at least one -OH or -SH group, in particular at least one -OH group,
said nano- or microparticles being functionalized with negatively charged ligands, in particular ligands bearing at least one carboxylic acid group.

All the embodiments described above for the process of the invention apply here as well, alone or in combination.

In another aspect, the present invention relates to a kit with one or more containers containing under an inert atmosphere or noble gas a polymer comprising polymerized amine-functionalized monomer units,
said monomer units being mono, bi-, tri- or tetrafunctional monomer units wherein said functions are chosen from acrylate, methacrylate, epoxy and vinyl groups, said vinyl groups not being acrylate or methacrylate groups, at least one of said functions being an acrylate, methacrylate or epoxy group,
said monomer units being functionalized by at least one amine,
said at least one amine being of following formula (I) NR₁R₂R₃, wherein R₁, R₂ and R₃ are each independently chosen from H and C₁-C₈ linear or branched alkyl groups optionally substituted by a group R₄ chosen from -OH, -SH and aromatic groups, in particular phenyl, with the proviso that when R₁, R₂ and R₃ are not H, then at least one of R₁, R₂ and R₃ is a C₁-C₈ linear or branched alkyl group substituted by at least one -OH or -SH group, in particular at least one -OH group.

All the embodiments described above for the process of the invention apply here as well, alone or in combination.

In a particular embodiment, said inert atmosphere or noble gases is selected from the group consisting of Helium (He), Neon (Ne), Argon (Ar), Krypton (Kr), Xenon (Xe), Radon (Rn), and their mixtures.

In a particular embodiment, said containers are gas impermeable.

In a particular embodiment, the at least one amine is not methyl diethanolamine.

In another aspect, the present invention relates to the use of a polymer comprising polymerized amine-functionalized monomer units as defined above, or a kit as defined above, to functionalize a solid support with nano- or microparticles.

### Definitions

The following terms and expressions contained herein are defined as follows:
As used herein, a range of values in the form "x-y" or "x to y", or "x through y", include integers x, y, and the integers therebetween. For example, the phrases "1-6", or "1 to 6" or "1 through 6" are intended to include the integers 1, 2, 3, 4, 5, and 6. Preferred embodiments include each individual integer in the range, as well as any subcombination of integers. For example, preferred integers for "1-6" can include 1, 2, 3, 4, 5, 6, 1-2, 1-3, 1-4, 1-5, 2-3, 2-4, 2-5, 2-6, etc.

By "nanoparticles" is notably meant particles that are between 1 and 1000 nm, for example between 1 and 500 nm, or between 1 and 100 nm, in at least one of their dimensions, in particular in diameter.

By "microparticles" is notably meant particles that are between 1 and 1000 µm, for example between 1 and 500 µm, or between 1 and 100 µm, in at least one of their dimensions, in particular in diameter.

All other terms used in the description of the present invention have their meanings as is well known in the art.

### DESCRIPTION OF THE DRAWINGS

**Figure 1** shows by SEM the polymer line with functionalization (**Figure 1A**) according to example 1 and without (**Figure 1B**) after immersion in citrate capped GNPs colloid for 5 hours.
**Figure 2** corresponds to SEM images of GNPs immobilization on: 3D Helices (**Figure 2A**) and woodpile (**Figure 2B**); flat square microstructure (**Figure 2C**) and continuous lines (**Figure 2D**).
**Figure 3** shows SEM images of woodpiles different periods: (**Figure 3A**) 0.6 (**Figure 3B**) 0.8 (**Figure 3C**) 1.0 and (**Figure 3D**) 1.5 µm; inner layers (**Figure 3E**) and bottom layers (**Figure 3F**) after immersion in GNPs colloid. Scale bar is 1 µm.

### EXAMPLES

### Example 1 : Preparation of a GNP functionalized polymer comprising polymerized amine-functionalized monomer units according to the invention

### Preparation of the amine-functionalized monomer

73.5% in weight of PETA monomer was functionalized by 15% in weight of methyldiethanol amine (MDEA), according to oxa-Michael addition reaction. This reaction is performed at a temperature ranging from 20 to 70°C and/or for 1 second to 1 hour, for example at a temperature 40°C and for 15 minutes.

### Preparation of the amine-functionalized polymer

1.5% of Irg-819 photoinitiator and 10 % of MEHQ inhibitor were added to the amine-functionalized monomer as described above in order to initiate the polymerization process. One drop from the prepared mixture was deposited on a glass substrate (22x22 mm) to write the desired microstructure by two-photon polymerization (TPP or 2PP) using Nanoscribe.

The photopolymerization process was performed by Nanoscribe Photonic Professional system with a femtosecond laser at λ = 780 nm focused by a 100x/1.3NA oil immersion objective.

After the accomplishing of the photo-polymerization process, lift-off was done in acetone and isopropanol in order to remove the un-polymerized materials.

### Functionalization with gold nanoparticles (GNP)

A colloidal suspension of citrate capped GNP (of about 40-50 nm of diameter) was prepared by the Turkevish's procedure as described by Frens et al. (Nature, vol. 241, no. 105, p. 20, 1973).

The amine-functionalized polymer obtained in the previous step was immersed for about 5 hours in said GNPs solution at a pH of 3.8.

### Results

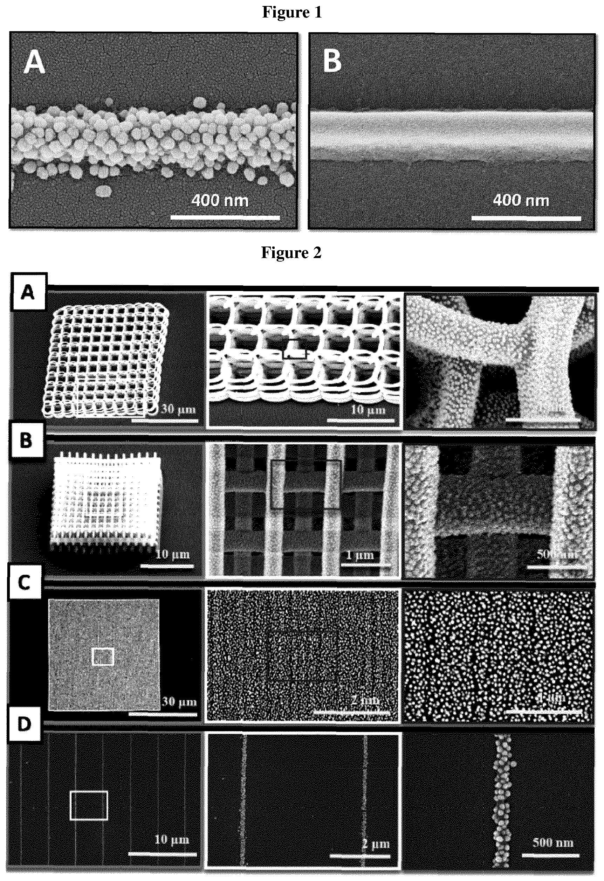

The scanning electron microscopy (SEM) images in **figure 1** show clearly the selective attachment of citrate capped GNPs (on the functionalized polymer by MDEA after 5 hours of immersion in the GNPs colloid (**Figure 1A**). While in the absence of the amine, no attachment of the NPs was observed (**Figure 1B**).

Similar attachment of NP were obtained when the PETA monomer was functionalized with diethanol amine (DEA), ethanolamine (EA) or diethyl amine, in the conditions described above.

### Example 2 : Assembly according to the invention of NPs on multiple dimensions and continuous length scale

A uniqueness of the process of the invention is the ability to assemble NPs on multiple dimensions and on continuous length scales, notably through direct laser writing by TPL, which allows writing any 1D, 2D and 3D structure by introducing the numerical script of the desired design in the software (Passinger et al. Adv. Mater. 2007, 19, 1218; Klein et al. Adv. Mater. 2010, 22, 868). As seen in **figure 2**, the SEM images show the attachment of GNPs on the 3D (**Figure 2A and B**), planar (**Figure 2C**) and linear (**Figure 2D**) structures. The GNPs attachment according to example 1 is obtained only on the polymer surface, without any aggregations appearing even on the complex 3D microstructures, and leaving a clean substrate surface. This confirms the high selectivity of the citrate capped GNPs towards the functionalized polymer surface and the efficiency of the method of the invention.

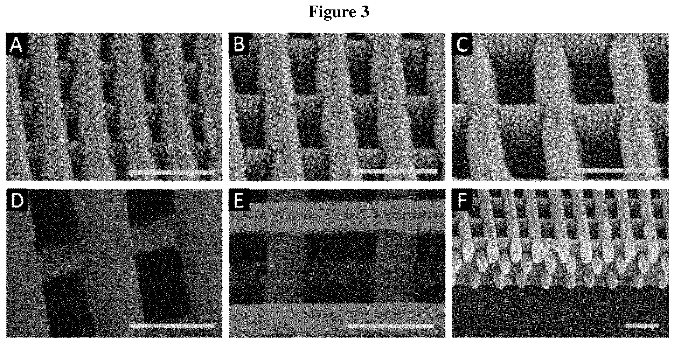

Besides the ability of multiple dimension fabrications, also by direct laser writing it is possible to control the gap size of the 3D microstructures, and thus the fabrication of different woodpiles of different periods (**Figure 3A****, B, C and D**) which have important properties in photonic crystal applications. The interest of the obtained results is that the GNPs penetrate inside the woodpiles porosities and are immobilized also on the inner layers (**Figure 3E**) and even on the bottom layers (**Figure 3F**).

### Example 2 : Preparation of a polystyrene (PS) functionalized polymer

Besides the GNPs immobilization, commercial PS nanoparticles spheres, stabilized by carboxylate ligands, of an average diameter ≈ 800 nm were successfully assembled following a procedure similar to the one of example 1, showing the capability of the process of the invention to assemble NPs that have large diameters.

### Example 3 : Preparation of silver NPs functionalized polymer

Citrated silver nanoparticles (AgNPs) of an average diameter of 30-45 nm were successfully attached on the polymer structures and their extinction spectrum shows a plasmonic peak on the planar polymer template at 416 nm.

### Example 4 : Immobilization of quantum dots on patterened functionalized polymer

Quantum dots (Qds), both commercial and homemade, were successfully attached on functionalized polymer.

The commercial QDs are PEG-COOH coated CdSe/ZnS red Qds with emission peak at 620 ±10 nm, were purchased from Mesolight.

CdSe/CdS/ZnS red Qds and CdSe/ZnS green Qds stabilized by oleic acid and TOP ligands were synthesized with emission peaks at 623 and 523 ±10 nm respectively following J. Kwak et al. (Nano Lett., vol. 12, no. 5, pp. 2362-2366, 2012).

For the synthesized Qds, a ligand exchange was performed by mercaptopropanoic acid (MPA) according to Dubois et al. (J. Am. Chem. Soc. 2007, 129, 3, 482-483), in order to attach them on the functionalized polymer.

The obtained material displays emission at 605 nm or 625 nm.

### Example 5 : Surface enhanced Raman spectroscopy (SERS) applications

Raman spectra of trans-1,2-bis-(4-pyridyl)-ethylene molecule (BPE) of 10⁻¹M was performed on glass substrate, and the SERS measurement of BPE of 10⁻⁵ M were performed on 2D (flat square microstructures) and 3D (woodpile of period 1.5 µm according to example 2) assemblies of GNPs. The SERS signals show an analytical enhancement factor (AEF) of the ring vibration peak at 1195 cm⁻¹ on 3D substrate 9.4 times stronger than on 2D substrate.

## Claims

1. A process for functionalizing a surface of a solid support with nano- or microparticles, said process comprising the stages of:
i) Reacting at least one monomer with at least one amine, to obtain an amine-functionalized monomer,
said at least one monomer being a mono, bi-, tri- or tetrafunctional monomer wherein said functions are chosen from acrylate, methacrylate, epoxy and vinyl groups, said vinyl groups not being acrylate or methacrylate groups, at least one of said functions being an acrylate, methacrylate or epoxy group,
said at least one amine being chosen from:
amines of following formula (I) NR₁R₂R₃, wherein R₁, R₂ and R₃ are each independently chosen from H and C₁-C₈ linear or branched alkyl groups optionally substituted by a group R₄ chosen from -OH, -SH and aromatic groups, in particular phenyl, with the proviso that when R₁, R₂ and R₃ are not H, then at least one of R₁, R₂ and R₃ is a C₁-C₈ linear or branched alkyl group substituted by at least one -OH or -SH group, in particular by at least one -OH group ; and
- aminoacids, in particular α-amino acids, more particulary natural aminoacids;
**ii**) bringing at least said surface into contact with a composition consisting of or comprising:
- the functionalized monomer obtained in step i) ;
- a polymerization initiator ;
- a solvent; and optionally
- a polymerization inhibitor ;
**iii**) polymerization of the composition of step ii) in contact with the surface to functionalize, to obtain a surface coated with an amine-functionalized polymer ; and
**iv**) contacting at least the surface coated with an amine-functionalized polymer obtained in step iii) with nano- or microparticles functionalized with negatively charged ligands, at a pH equal or less than (pKa of the amine, in particular of formula (I), + 1), to obtain a solid support with a surface functionalized with nano- or microparticles.

2. The process according to claim 1, wherein the nano- or microparticles have a size ranging from 1 nm to 100 µm, in particular from 1 nm to 1 µm.

3. The process according to any one of the preceding claims, wherein the nano- or microparticles are constituted of or comprise a material chosen from metals, in particular gold silver, platinum or aluminum, metal oxides, in particular iron oxides and graphene oxide, diamonds, polymers, in particular polystyrenes, and semiconductors, in particular quantum dots.

4. The process according to any one of the preceding claims, wherein the solid support, in particular a flexible solid support, is chosen from the group consisting of conducting, semiconducting or insulating materials, in particular among metals, metal oxides, polymers, glasses, silicon, papers and carbon materials.

5. The process according to any one of the preceding claims, wherein the at least one monomer is :
- a mono, bi-, tri- or tetrafunctional, in particular trifunctional, monomer wherein said functions are acrylate groups, or
- a mono, bi-, tri- or tetrafunctional, in particular bi-functional, monomer wherein said functions are epoxy groups.

6. The process according to any one of the preceding claims, wherein the at least one monomer is chosen from pentaerythriol triacrylate, trimethylolpropane triacrylate, pentaerythritol tetraacrylate, di(trimethylolpropane) tetraacrylate, triethylene glycol dimethacrylate, 1,6-Hexanediol diacrylate (HDODA), aromatic urethane triacrylate, for example EBECRYL@ 204, bisphenol A epoxy diacrylate, for example Ebecryl® 3708 or EBECRYL@ 605, bisphenol A diglycidyl ether.

7. The process according to any one of the preceding claims, wherein the at least one amine of formula (I) is such as:
- R₁, R₂ and R₃ are each independently chosen from C₁-C₈ linear or branched alkyl groups, at least one of these groups, in particular two of these groups, being substituted by one -OH group;
- R₁ is H, R₂ and R₃ are each independently chosen from C₁-C₈ linear or branched alkyl groups, at least one of these groups, in particular both of these groups, being optionally substituted by one -OH group; or
- R₁ and R₂ are H, and R₃ is chosen from C₁-C₈ linear or branched alkyl groups optionally substituted by one -OH group.

8. The process according to any one of the preceding claims, wherein the at least one amine of formula (I) is chosen from methyl diethanolamine, diethanolamine, diethyl amine, n-propylamine, n-butylamine, n-pentylamine, methanol amine, ethanolamine, n-propanol amine, n-butanol amine, n-pentanol amine, diethyl amine, dipropyl amine, dibutyl amine, dipentyl amine, dimethnaol amine, diethanol amine, dipropanol amine, dibutanol amine, dipentanol amine, and their derivatives.

9. The process according to any one of the preceding claims, wherein the reaction of step i) is performed at a temperature ranging from 20 to 70°C and/or for 1 second to 2 weeks, in particular from 1 second to 1 hour.

10. The process according to any one of the preceding claims, wherein the composition is brought into contact with the surface during step ii) by dipping, spincoating, sprinkling, projection, transfer, in particular with a syringe, drawdown application coating or spraying.

11. The process according to any one of the preceding claims, wherein the polymerization of step ii) is a radiation induced polymerization, in particular a photopolymerization or an electron beam-induced polymerization, or a thermally induced polymerization, more particularly a photopolymerization, even more particularly a radical and/or cationic photopolymerization.

12. A nano- or microparticles functionalized polymer comprising polymerized amine-functionalized monomer units,
said monomer units being mono, bi-, tri- or tetrafunctional monomer units wherein said functions are chosen from acrylate, methacrylate, epoxy and vinyl groups, said vinyl groups not being acrylate or methacrylate groups, at least one of said functions being an acrylate, methacrylate or epoxy group,
said monomer units being functionalized by at least one amine,
said at least one amine being of following formula (I) NR₁R₂R₃, wherein R₁, R₂ and R₃ are each independently chosen from H and C₁-C₈ linear or branched alkyl groups optionally substituted by a group R₄ chosen from -OH, -SH and aromatic groups, in particular phenyl, with the proviso that when R₁, R₂ and R₃ are not H, then at least one of R₁, R₂ and R₃ is a C₁-C₈ linear or branched alkyl group substituted by at least one -OH or -SH group, in particular at least one -OH group,
said nano- or microparticles being functionalized with ligands bearing negatively charged ligands, in particular ligands bearing at least one carboxylic acid group.

13. A kit with one or more containers containing under an inert atmosphere or noble gas a polymer comprising polymerized amine-functionalized monomer units,
said monomer units being mono, bi-, tri- or tetrafunctional monomer units wherein said functions are chosen from acrylate, methacrylate, epoxy and vinyl groups, said vinyl groups not being acrylate or methacrylate groups, at least one of said functions being an acrylate, methacrylate or epoxy group,
said monomer units being functionalized by at least one amine,
said at least one amine being of following formula (I) NR₁R₂R₃, wherein R₁, R₂ and R₃ are each independently chosen from H and C₁-C₈ linear or branched alkyl groups optionally substituted by a group R₄ chosen from -OH, -SH and aromatic groups, in particular phenyl, with the proviso that when R₁, R₂ and R₃ are not H, then at least one of R₁, R₂ and R₃ is a C₁-C₈ linear or branched alkyl group substituted by at least one -OH or -SH group, in particular at least one -OH group.

14. Use of a polymer comprising polymerized amine-functionalized monomer units as defined in claim 13, to functionalize a solid support with nano- or microparticles.
